# EUROPEAN PATENT SPECIFICATION

(11) **EP 4 356 289 B1**
(45) Date of publication and mention of the grant of the patent: **29.07.2026**
(21) Application number: 22748062.1
(22) Date of filing: 09.06.2022
(51) Int. Cl.: G06V 20/30, G06V 40/16

(54) **METHOD FOR OPERATING AN ELECTRONIC DEVICE TO BROWSE A COLLECTION OF IMAGES**
VERFAHREN ZUM BETRIEB EINER ELEKTRONISCHEN VORRICHTUNG ZUM DURCHSUCHEN EINER SAMMLUNG VON BILDERN
PROCÉDÉ D'EXPLOITATION D'UN DISPOSITIF ÉLECTRONIQUE POUR PARCOURIR UNE COLLECTION D'IMAGES

(30) Priority: 14.06.2021 WO PCT/CN2021/099920
(43) Date of publication of application: 24.04.2024
(73) Proprietor: Orange, 92130 Issy-les-Moulineaux (FR)
(72) Inventor: GUO, Zhihong, Beijing, Chaoyang District 100013 (CN); HAN, Liang, Beijing, Dongcheng District 100013 (CN)
(74) Representative: Regimbeau
(86) International application number: PCT/IB2022/000322
(87) International publication number: WO 2022/263925

(56) References cited:
- ESTEBAN VAZQUEZ-FERNANDEZ ET AL: "Built-in face recognition for smart photo sharing in mobile devices", MULTIMEDIA AND EXPO (ICME), 2011 IEEE INTERNATIONAL CONFERENCE ON, IEEE, 11 July 2011 (2011-07-11), pages 1 - 4, XP031964735, ISBN: 978-1-61284-348-3, DOI: 10.1109/ICME.2011.6012057

## Description

### FIELD OF THE INVENTION

The field of this invention is that of user access to contents.

More particularly, the invention relates to a method for operating an electronic device to browse images.

### BACKGROUND OF THE INVENTION

Mobile terminal such as smartphones are widely used for taking pictures, and generally end up storing thousands of photos and other downloaded images.

When a user wants to find specific images, such as photos of given people (relatives, friends, or even the user themselves), the user has no choice but to browse through a gallery of thumbnails previews up to find the suitable images (which sometimes requires opening the images to confirm, as the thumbnails are really small), which is inconvenient.

The mobile terminals are generally provided with image management applications for facilitating the handling of large numbers of images, which further allows to filter the photos by date, place, album or collection, but this does not help much when for instance photos of a given person are wanted.

The most recent image management applications are provided with fully or semi-automated facial recognition algorithms. In more details, these applications are able to recognize faces in images and may be used to construct "sets" of images representing the same face (as albums). Such facial recognition algorithms may also be used for sharing photos, as described in "Built-in face recognition for smart photo sharing in mobile devices", E. Vazquez-Fernandez et al., 2011 IEEE International Conference on Multimedia and Expo. In this article, faces in pictures are detected and compared against (biometric) database of contacts, so that contacts in these pictures may be identified. The identified faces may then be dragged and dropped to an email icon in order for the picture to be sent to email addresses linked to the identified contacts.

This improves the situation, but if the user wishes to find the photos of given people, they have still to browse through the recognized faces up to find the corresponding set(s). If the user wants to find the photos of several people, they have to access the corresponding sets one by one.

There is consequently a need for a method allowing to easily and efficiently browse through images collections.

### SUMMARY OF THE INVENTION

For these purposes, the present invention provides a method for operating an electronic device to browse a collection of images, characterized in that said method comprises the steps of:
determining a target person, said target person being a person involved in an operation performed using said an electronic device;
adapting a subset of said collection of images based on people represented in said images as a function of said target person, wherein said adapting comprises selecting and/or sorting said subset of said collection of images; and
displaying, on an interface of the device, said subset of said collection of images, the displayed subset of images being arranged according to said adapting.

Preferred but non limiting features of the present invention are as follow:
- The method comprises a step of detecting a trigger event performed by a user on the electronic device, the step of determining the target person being performed in response to said detection of a trigger event;
- The method further comprises performing on at least one of said images a face recognition algorithm in order to recognize at least one person in said at least one of said images;
- Performing, on at least one of said images, said face recognition algorithm comprises determining parameters characterizing a face of a person represented in said image, the adapting of the subset being performed based on said parameters;
- Contact details of at least one known person are associated, in the electronic device, with a reference face of said known person and/or with parameters characterizing said reference face, the adapting of the subset being performed based on said reference face and/or parameters;
- Adapting a subset of said collection of images comprises selecting said subset of said collection of images based on people represented in the images as a function of said target person, in particular selecting the subset of said collection of images representing said target person;
- Adapting a subset of said collection of images comprises sorting said subset of said collection of images based on people represented in the images as a function of said target person;
- Adapting a subset of said collection of images is performed according to a given criterion about said people represented in the images with respect to the target person, said given criterion being in particular an intimacy link level between the target person and said people represented in the images;
- Said target person is determined as being the person currently using the device;
- Determining said target person comprises acquiring a picture with a camera of the device and detecting the target person in said acquired picture.

In a second aspect, the invention provides an electronic device to browse a collection of images, characterized in that it comprises a processing unit configured to command displaying, on an interface of the device, a subset of a collection of images, said subset being arranged according to an adapting process wherein said subset is selected and/or sorted based on people represented in the images as a function of a determined target person, said target person being a person involved in an operation performed using said an electronic device.

The processing unit may be further configured to determine said target person and adapt said subset based on people represented on the image as a function of said target person.

According to a third and a fourth aspects, the invention provides a computer program product, comprising code instructions for executing a method according to the first aspect for operating an electronic device to browse a collection of images; and a computer-readable medium, on which is stored a computer program product comprising code instructions for executing a method according to the first aspect for operating an electronic device to browse a collection of images.

### BRIEF DESCRIPTION OF THE DRAWINGS

The above and other objects, features and advantages of this invention will be apparent in the following detailed description of an illustrative embodiment thereof, which is to be read in connection with the accompanying drawings wherein:
- figure 1 illustrates an example of architecture in which the method according to the invention is performed;
- figures 2a and 2b are diagram representing steps of two preferred embodiments of a method according to the invention; and
- figure 3 represents an example of display when an embodiment of the method according to the invention is performed.

### DETAILED DESCRIPTION OF A PREFERRED EMBODIMENT

### Architecture

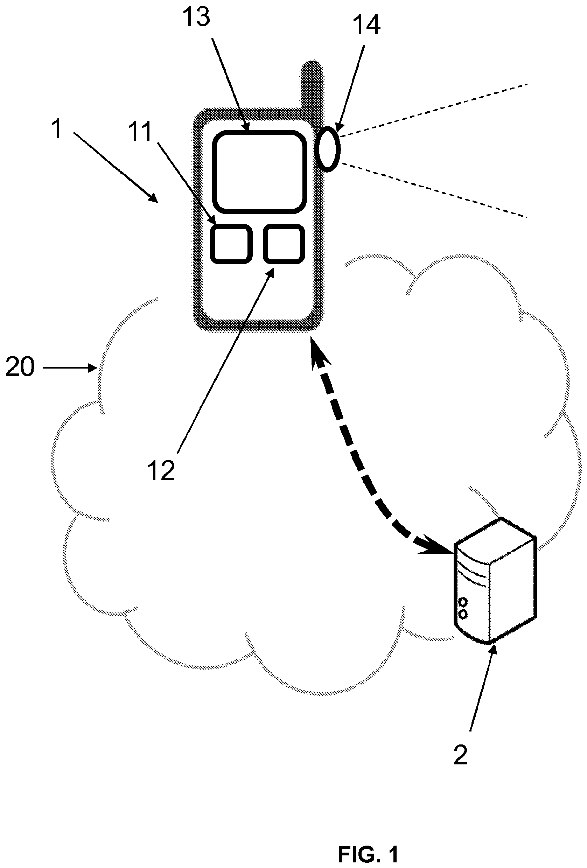

The present invention relates to a method for operating an electronic device 1 to browse a collection of images, as represented by **figure 1****.** In other words, the device 1 is supposed to have access to said collection of images, which are hosted locally (images are stored on a storage unit 12 of the device 1) and/or remotely (images are stored on a remote server 2, e.g. in the so-called "cloud"). Note that there may be a hybrid mode wherein the device 1 stores thumbnails of images (i.e. smaller and lower quality versions of the images) but not the images themselves, which may then be stored remotely. The device 1 may be connected to the server 2, in particular through a network 20 (notably via a mobile network, in particular a GSM/UMTS/LTE/5G network).

Said images are preferably photos, i.e. pictures of a live scene, in particularly representing at least one person, but it is to be understood that collection images generally also includes images which are not photos such as drawings, memes, screenshots.

The electronic device 1 is typically a smartphone, a tablet, a digital camera or any other personal terminal of a user. It comprises at least a processing unit 11 (typically a processor), and generally the interface 13 (typically a screen, possibly touch sensitive), the storage unit 12 (a memory, for instance flash memory), at least one built-in camera 14 (for directly acquiring images and adding them to the collection), etc. In a preferred embodiment, said built-in camera 14 is a front camera able to acquire a photo of the person using the device 1.

### Browsing a collection of images

The device 1 is typically configured to allow, on said interface 13, displaying said collection of images or at least a selected subset of said collection of images, to browse these images. The collection may be "adapted", meaning that the images of the collection may be filtered (i.e. a subset images of said collection can be selected) and/or sorted (i.e. their order in the collection can be changed) based on one or more criteria such as location, date, etc. To this end, the images may be associated to one of more tags.

Note that the collection (and even a selected sub-set) could include thousands of images, and it generally not possible to display all of them simultaneously, so that it will be understood that they could be displayed along a plurality of pages, in a scrollable fashion.

In a preferred embodiment, thumbnails of a set number (referred to as "n") of images are actually displayed at once (i.e. on a single displayed page), as a preview of these images, in a scrollable fashion as mentioned. Said number n may depend from the size of the interface and configuration parameters possibly chosen by the user. When the user scrolls, the thumbnails change.

In other words, it will be understood in the following description that "displaying" a set of images does not mean that they are all are visible at once. To rephrase, if device 1 is instructed to display a sub-set of m images:
- if m≤n, they can all be displayed at once on a single page;
- if m>n, only the m first images will be visible on a first page, then the remaining m-n would only become visible after one or more scrolling actions from the user, but all the m images are considered as "displayed" to the user.

Further examples will be presented below.

We refer to as an "arrangement" of the images a specific organization of the thumbnails on a given page, in accordance with how the images are filtered and/or sorted.

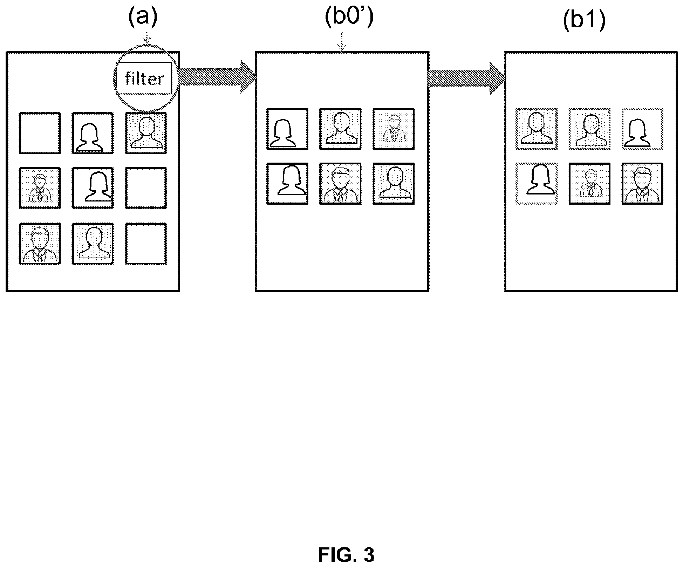

For instance, let's assume that n=9 and the interface is configured to display a matrix of 3x3 thumbnails (see the example of **figure 3** that will be described after), and that we have a collection of 15 images (I₁, I₂ ... I₁₅) which after filtering (the sub-set contains m=10 images) and sorting becomes {I₁₀, I₁, I₂, I₃, I₆, I₉, I₁₄, I₁₂, I₁₁, I₅}. Then an initial arrangement of the images (on a first displayed page) would be:
I₁₀, I₁, I₂
I₃, I₆, I₉
I₁₄, I₁₂, I₁₁

We see that I₅ is not yet displayed because only n=9 thumbnails can be simultaneously visible.

If the user scrolls down, the arrangement (in a second displayed page) could become according to settings:
I₅ (whole new page)
   Or
I₃, I₆, I₉ (one line shift)
I₁₄, I₁₂, I₁₁
I₅
   Or
I₁, I₂, I₃ (one image shift)
I₆, I₉, I₁₄
I₁₂, I₁₁, I₅

The present invention will not be limited to any strategy for arranging the images, as soon as the result of adapting (filtering and/or sorting) the collection of images is respected.

In any case, the user may select a given image by clicking its thumbnail, which has generally the effect of enlarging it full screen size (the original image, rather than the thumbnail, is thus displayed by the interface 13).

Preferably, the device 1 implements said browsing of the collection of images through a dedicated application to handle collections of images (an image management application etc.), or through any application wherein collections of images could be displayed (for instance a messaging application wherein an image can be attached to a message), or directly by the operating system of the electronic device 1.

### Method

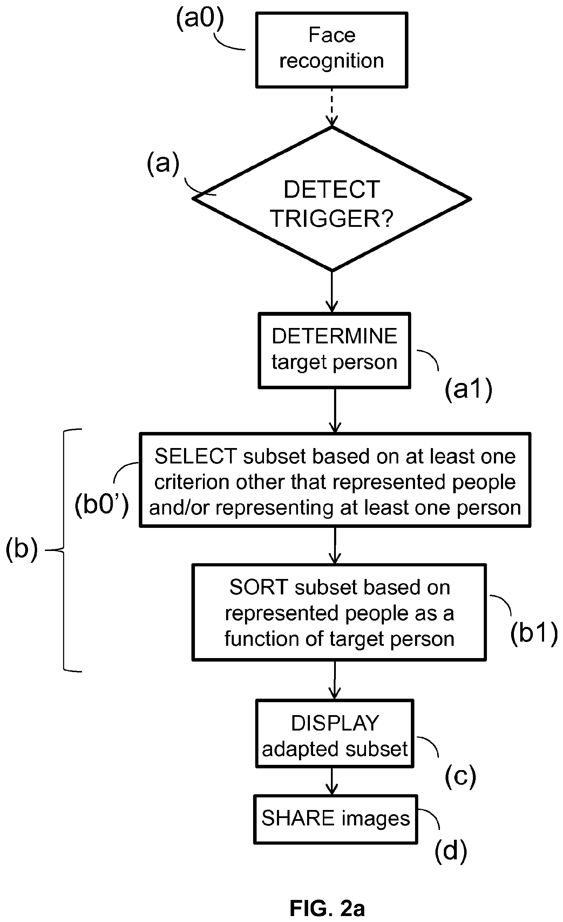

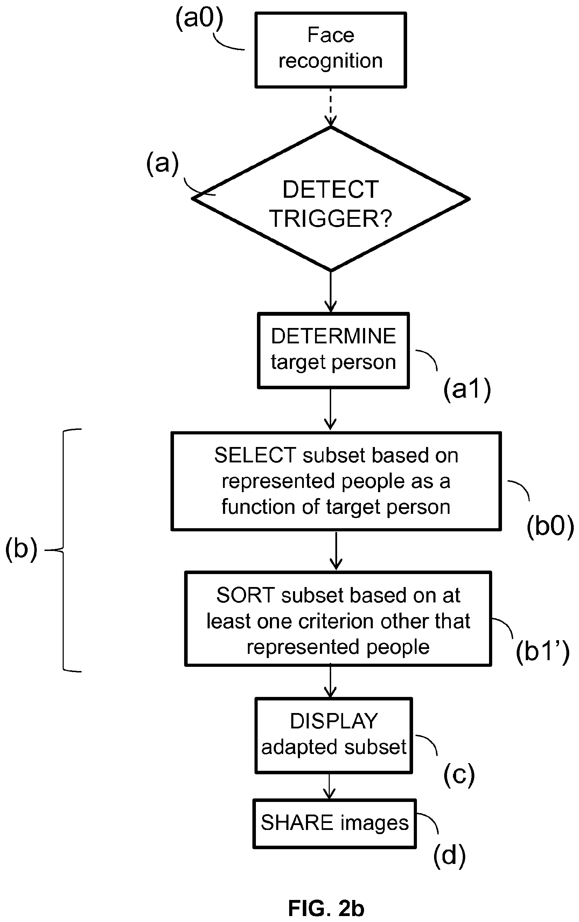

With reference to **figure 2a** **and** **2b****,** the present method proposes in a step (a1) to determine a target person, and in a step (b) to adapt a subset of said collection of images based on people represented in the images as a function of said target person. Determining step (a1) and/or adapting step (b) can be performed by the processing unit 11 in specific embodiments where interactions with the network are more limited (but could also be performed remotely, in a server of the network which may have more processing power than the device 1). As already explained, by "adapting", it is meant selecting (b0, b0') and/or sorting (b1) said subset, at least one of them being based on people represented in the images as a function of said target person.

Said step (a1) may follow an optional step (a) of detecting a trigger event such as a pressing a dedicated button on the interface 13 (for example a "portrait" button, see below), i.e. the target person is determined and the subset of images is adapted only after detecting said trigger event.

This trigger event may be of any type, in particular any action by the user on said interface 13 representative of an intent of adapting the images based on people represented in the images. Alternatively, the device 1 (more particularly the dedicated application) may be set to automatically determine "by default" the target person, i.e. no trigger is necessary.

In any case, in a following step (c), the method comprises displaying, on the electronic device 1, said subset of said collection arranged according to said adapting. As explained, all the images displayed are not necessarily visible at once, and scrolling may be required.

By "target person", it is meant here a person involved in any operation performed using the electronic device 1. In other words, a target person is only determined when the electronic device 1 is actually used for a specific operation, this target person being a person involved in this specific operation (i.e. it cannot be a person defined out of the context of an operation involving this person and performed with the device 1).

To this end, the determination (a1) of the target person may comprise automatically detecting, by the device 1, that a person is involved in an operation performed using the electronic device 1 (this person can be the user actually performing the operation or any other user concerned by this operation, as illustrated later) and, once such a person is automatically detected, defining this detected person as being the target person with respect of whom the following steps of the present method are to be performed.

The above-mentioned operation is in particular an ongoing operation performed by a user with this electronic device 1 (in other words an operation currently performed by a user with the electronic device 1) when the determination of the target person occurs or is triggered. This way, a dynamic and automatic selection of the target person, with respect of whom the following steps of the present method are to be performed, can be achieved by merely using the electronic device, in particular when performing standard operations with the device.

This target person is preferably a person using the device 1 (which is not necessarily the usual device's owner but for instance a friend of the user that could be directly browsing their own photos), but can also be a person to which the device's user is very likely to show or send images representing them.

The idea is to automatically adapt the displayed images to said target person instead of having for example to manually browse through several sets of recognized faces in order to find images which are relevant for this target person.

In a particular embodiment, the "target person" is actually a person targeted (i.e. aimed at on purpose) by an operation performed by the user using the electronic device 1, for instance the subject of a picture taken by the user with the camera of device 1 or the recipient of a message prepared by a user with a messaging application installed on device 1.

Hence, in a particularly preferred embodiment, determining (a1) the target person comprises acquiring a picture of the person using the device 1 with the camera 14 (in particular a front camera as the person using the device 1 is in front of the device 1), the target person being then determined as the person represented by this picture. In that case, the above-mentioned "operation performed using the device" is the capture of a picture including the target person, with the camera of the device 1.

A typical use case could be as follow: the user Alice has already taken some photos of Bob and saved those photos in her collection of images. When Alice lets Bob review the photos on her electronic device, Bob's face can be recognized by Alice's electronic device and the subset of images containing Bob's face will be selected or sorted first, so that in this case Bob will more easily browse his own photos, in a faster way.

As already explained, the target person is not necessarily the person actually using the device 1. For example, in the case where the method is performed in a messaging application, a button for enclosing an image to a message may be provided, and pressing said button displays a collection of images. In such a case, the target person may typically be determined as being the current message recipient. In that case, the above-mentioned "operation performed using the device" is the preparation on device 1 of a message for a recipient, this recipient being then defined as being the target person.

Alternatively, the device's user could directly acquire a picture of any person (a friend for example) with the camera 14 and the target person is determined as the person represented by this picture. Here again, the above-mentioned "operation performed using the device" is the capture of a picture including the target person, with the camera of the device 1.

### Selecting and/or sorting

As already explained, adapting (b) a subset of said collection of images based on people represented in the images as a function of said target person typically comprises selecting (b0, b0') and/or sorting (b1, b1') said subset, preferably both.

At least one of selecting and sorting is performed based on people represented in the images as a function of said target person (respectively referred to as steps (b0) and (b1) - steps (b0') and (b1') refer to selecting and sorting based on at least one criterion other than people represented in the images, for instance date or location, i.e. the user may still apply filtering according to known criteria), possible both.

According to a first embodiment, represented by **figure 2a****,** adapting (b) a subset of said collection of images thus comprises sorting (b1) said subset of said collection of images based on people represented in the images.

"Sorting" means here only changing the order of the photos within a subset of images, but the subset is kept complete. In other words, after sorting step (b1), one is not restricted only to the photos representing a single person, as it may be the case in the prior art wherein sets of images, each comprising images representing the same person, are constructed: in particular, said sub-set sorted at sorting step (b) may comprise images representing at least two different people. This avoids the needs for accessing several sets of images one after the other.

To rephrase, the sorting of step (b1) just reorganizes the images of a subset to be displayed, without removing images from this subset.

Note that as explained said collection may have been incidentally filtered (i.e. restricted), so that not the whole collection of images is sorted and displayed. Thus, the method advantageous comprises, before sorting step (b1), a step of selecting (b0') said subset of images within a larger collection of images, in particular based on at least one criterion other than people represented in the images (for instance date or location, i.e. the user may still apply filtering according to known criteria) and/or representing at least one person (anyone), i.e. said selected subset only contains images representing at least one person, so that are sorted and then displayed only the images representing at least one person (i.e. excluding images which does not represent any person, for example representing landscapes or animals).

In the example of figure 3, we see that from the collection, is first selected the subset of images representing at least one person (only 6 images are remaining, on which performing the sorting step (b0')) and then the selected images are sorted (b1).

Typically, the represented people are sorted, and the images' sorting simply follows this sorting, i.e. images representing the "first" person then the images representing the "second" person, etc. Note that each photo is preferably only displayed once (i.e. even if it represents several people).

Sorting the people is preferably performed according to a given criterion about said people, expressed with respect to the target person.

In the preferred embodiment wherein name tag(s) of contacts are identified, further criterion based on contact details and/or personal information can be used, such as:
- intimacy link level with the target person: the images can be sorted to have first images representing the target person, then images representing family members of this target person, then images representing close friends of this target person, then images representing friends of this target person, then images representing professional colleagues of this target person, and finally images representing "other" contact persons of this target person.
   ∘ the target person can have directly provided in their contact details said intimacy link level (for instance within a list comprising family, close friends, friends, professional colleagues, etc.);
   ∘ The intimacy link level with the target person can be automatically determined based on a behavior or a relationship, for instance as indicated on a social media;
- latest social interactions, for instance on the basis of messages, phone calls, e-mails and/or various social networks. The images could be sorted to have first images representing the person having the most recent social interaction with the target person, then representing the second one, etc.;
- frequency of social interactions, for instance on the basis of the number of exchanged messages, phone calls and/or e-mails.

These embodiments based on contact details and/or personal information are really useful for improving image/photo sharing, because the sorting will automatically prioritize the images representing people to which the target person is very likely to show or send these images.

According to a second embodiment represented by **figure 2b****,** adapting (b) a subset of said collection of images comprises selecting (b0) said subset of images within a larger collection of images based on people represented in the images as a function of said target person.

Similar criteria may be used, such as the selection of people having a given intimacy link level with the target person, such as "family", but alternatively could be simply selected in step (b0) the subset of said collection of images representing said target person. In other words, the collection is restricted to the images representing the target person, which simplifies the browsing.

This embodiment can further comprise sorting (b1') said subset of said collection of images based on at least one criterion other than people represented.

### Face recognition

In order to be able to adapt at step (b) said subset of said collection of images based on people represented in the images, each image may be advantageously provided with information about the people represented.

The method thus preferably comprises a step (a0) of performing on said images a face recognition algorithm, so as to recognize (and preferably identify), for each image, the people represented by the image.

The face recognition technology is well known to the skilled person, it generally comprises a first phase to detect face(s) if any within an image and a second phase to recognize a detected face, in particular by comparing it with already recognized "reference" faces.

To this end, the face recognition technology may determine parameters characterizing a face, for example so-called "facial landmarks" which mark the following facial regions: Mouth, Right/Left eyebrow, Right/Left eye, Nose, Jaw. Such landmarks parameters are thus output data of the face recognition process, which characterize the face as recognized, can be stored efficiently (in particular as a points array) and compared with other landmarks parameters using a similarity algorithm. Generally, a detected face is matched to a reference face if their similarity score is above a certain threshold.

Each image can be for instance associated, for each person represented by the image, with parameters characterizing the face of the person (landmarks parameters) or directly an identifier of the corresponding reference face(s).

Note that the face recognition technology is very convenient for constructing albums each defined by a reference face (i.e. containing all images representing a person with a face matching said reference face), thus albums are associated with a given person, this person being here "recognized" but actually not "identified".

By contrast, it would be preferable to actually identify the represented people (i.e. determine their name) and directly associate an image with name tag(s).

To this end, the present invention proposes to astutely associate contact details (in the device 1) of at least one known person with their reference face or directly parameters characterizing said reference face. Hence, once a contact person of device's user has been recognized in an image, the face recognition algorithm is able to identify this contact person.

Note that an associated name tag can be saved within the image file, or the name tag & an image identifier be stored in a unique database.

In every case, said step (a0) may be performed:
- entirely in advance, as in figure 2, i.e. the pre-recognition process is performed in background, or immediately at each time an image is added to the collection (acquired or received), which can reduce the workload of a whole process of face recognition. In such an embodiment, each image of the collection is assumed to have undergone the face recognition algorithm, and be associated to face data or even directly name tag(s) designing at least one contact;
- with step (a), when detecting said trigger event;
- in two phases: firstly face detection is typically performed with step (a) or before it, and then the actual face recognition (i.e. the matching of the landmark parameters, and possibly identification of name tags) is performed in step (b1) for each image of the selected sub-set.

Note that the automatic determination of the target person through face recognition is very efficient and does not require associating to contact details with reference faces or directly parameters characterizing said reference faces, because the face visible in said picture (the face of a target person such as the person using the device 1) can be directly used as reference face for the matching. Note that in such case the target person is not identified (i.e. their identity is not determined).

Nevertheless, it appears particularly advantageous to have such identification based on contact details, in order to allow more complex adapting at step (b), e.g. adapting based on intimacy link level.

### Device and computer program

In a second aspect, the present invention a device 1 comprising a processing unit 11, and interface 13, possibly a memory 12 and/or a built-in camera 14, adapted for carrying out the method as previously described to browse on the device 1 said collection of images.

Said processing unit 11 is configured to implement:
- Preferably determining (a1) a target person; and adapting (b) a subset of said collection of images based on people represented in the images as a function of said target person;
- Command displaying (c) on an interface 13 of the device 1 said subset of said collection of images, said subset being arranged according to said adapting.

The invention further proposes a computer program product, comprising code instructions for executing (in particular with a processing unit 11 of the device 1) a method according to the first aspect for operating an electronic device 1 to browse a collection of images; and a computer-readable medium (in particular a memory 12 of the device 1), on which is stored a computer program product comprising code instructions for executing said method.

## Claims

1. A method for operating an electronic device (1) to browse a collection of images, **characterized in that** said method comprises the steps of:
determining (a1) a target person, said target person being a person involved in an operation performed using said an electronic device (1);
adapting (b) a subset of said collection of images based on people represented in said images as a function of said target person, wherein said adapting comprises selecting (b0, b0') and/or sorting (b1) said subset of said collection of images; and
displaying (c), on an interface (13) of the device (1), said subset of said collection of images, the displayed subset of images being arranged according to said adapting.

2. A method according to claim 1, further comprising a step (a) of detecting a trigger event performed by a user on the electronic device (1), the step of determining (a1) the target person being performed in response to said detection of a trigger event.

3. A method according to any one of claims 1 and 2, further comprising performing (a0) on at least one of said images a face recognition algorithm in order to recognize at least one person in said at least one of said images.

4. A method according to claim 3, wherein performing (a0), on at least one of said images, said face recognition algorithm comprises determining parameters characterizing a face of a person represented in said image, the adapting (b) of the subset being performed based on said parameters.

5. A method according to claim 4, wherein contact details of at least one known person are associated, in the electronic device (1), with a reference face of said known person and/or with parameters characterizing said reference face, the adapting (b) of the subset being performed based on said reference face and/or parameters.

6. A method according to any one of claims 1 to 5 , wherein adapting (b) a subset of said collection of images comprises selecting (b0) said subset of said collection of images based on people represented in the images as a function of said target person, in particular selecting the subset of said collection of images representing said target person.

7. A method according to claim 6, wherein adapting (b) a subset of said collection of images comprises sorting (b1) said subset of said collection of images based on people represented in the images as a function of said target person.

8. A method according to any one of claims 1 to 7, wherein adapting (b) a subset of said collection of images is performed according to a given criterion about said people represented in the images with respect to the target person, said given criterion being in particular an intimacy link level between the target person and said people represented in the images.

9. A method according to any one of claims 1 to 8, wherein said target person is determined as being the person currently using the device (1).

10. A method according to any one of claims 1 to 9, wherein determining (a1) said target person comprises acquiring a picture with a camera (14) of the device (1) and detecting the target person in said acquired picture.

11. An electronic device (1) to browse a collection of images, **characterized in that** it comprises a processing unit (11) configured to command displaying (c), on an interface (13) of the device (1), a subset of a collection of images, said subset being arranged according to an adapting process wherein said subset is selected (b0,b0') and/or sorted (b1) based on people represented in the images as a function of a determined target person, said target person being a person involved in an operation performed using said an electronic device.

12. The electronic device (1) of claim 11, wherein the processing unit (11) is further configured to determine (a1) said target person and adapt (b) said subset based on people represented on the image as a function of said target person.

13. A computer program product, comprising code instructions for executing a method according to any one of claims 1 to 10 for operating an electronic device (1) to browse a collection of images.

14. A computer-readable medium, on which is stored a computer program product comprising code instructions for executing a method according to any one of claims 1 to 10 for operating an electronic device (1) to browse a collection of images.

## Patentansprüche

1. Verfahren zum Betreiben einer elektronischen Vorrichtung (1) zum Durchsuchen einer Sammlung von Bildern, **dadurch gekennzeichnet, dass** das Verfahren die folgenden Schritte umfasst:
Bestimmen (a1) einer Zielperson, wobei die Zielperson eine Person ist, die an einer Operation beteiligt ist, die unter Verwendung der elektronischen Vorrichtung (1) durchgeführt wird;
Anpassen (b) einer Teilmenge der Sammlung von Bildern basierend auf in den Bildern dargestellten Personen in Abhängigkeit von der Zielperson, wobei das Anpassen Auswählen (b0, b0') und/oder Sortieren (b1) der Teilmenge der Sammlung von Bildern umfasst; und
Anzeigen (c), auf einer Schnittstelle (13) der Vorrichtung (1), der Teilmenge der Sammlung von Bildern, wobei die angezeigte Teilmenge von Bildern gemäß der Anpassung angeordnet wird.

2. Verfahren nach Anspruch 1, ferner umfassend einen Schritt (a) zum Detektieren eines Auslöseereignisses, das durch einen Benutzer auf der elektronischen Vorrichtung (1) durchgeführt wird, wobei der Schritt zum Bestimmen (a1) der Zielperson als Reaktion auf die Detektion eines Auslöseereignisses durchgeführt wird.

3. Verfahren nach einem der Ansprüche 1 und 2, ferner umfassend Durchführen (a0) eines Gesichtserkennungsalgorithmus an mindestens einem der Bilder, um mindestens eine Person in dem mindestens einen der Bilder zu erkennen.

4. Verfahren nach Anspruch 3, wobei das Durchführen (a0) des Gesichtserkennungsalgorithmus an mindestens einem der Bilder Bestimmen von Parametern umfasst, die ein Gesicht einer in dem Bild dargestellten Person kennzeichnen, wobei das Anpassen (b) der Teilmenge basierend auf den Parametern durchgeführt wird.

5. Verfahren nach Anspruch 4, wobei Kontaktdetails mindestens einer bekannten Person in der elektronischen Vorrichtung (1) mit einem Referenzgesicht der bekannten Person und/oder mit Parametern verknüpft werden, die das Referenzgesicht kennzeichnen, wobei das Anpassen (b) der Teilmenge basierend auf dem Referenzgesicht und/oder den Parametern durchgeführt wird.

6. Verfahren nach einem der Ansprüche 1 bis 5, wobei das Anpassen (b) einer Teilmenge der Sammlung von Bildern Auswählen (b0) der Teilmenge der Sammlung von Bildern basierend auf in den Bildern dargestellten Personen in Abhängigkeit von der Zielperson, insbesondere Auswählen der Teilmenge der Sammlung von Bildern, die die Zielperson darstellen, umfasst.

7. Verfahren nach Anspruch 6, wobei das Anpassen (b) einer Teilmenge der Sammlung von Bildern Sortieren (b1) der Teilmenge der Sammlung von Bildern basierend auf in den Bildern dargestellten Personen in Abhängigkeit von der Zielperson umfasst.

8. Verfahren nach einem der Ansprüche 1 bis 7, wobei das Anpassen (b) einer Teilmenge der Sammlung von Bildern gemäß einem vorgegebenen Kriterium zu den in den Bildern dargestellten Personen in Bezug auf die Zielperson durchgeführt wird, wobei das vorgegebene Kriterium insbesondere ein Grad an Intimität der Verbindung zwischen der Zielperson und den in den Bildern dargestellten Personen ist.

9. Verfahren nach einem der Ansprüche 1 bis 8, wobei bestimmt wird, dass die Zielperson die Person ist, die derzeit die Vorrichtung (1) verwendet.

10. Verfahren nach einem der Ansprüche 1 bis 9, wobei das Bestimmen (a1) der Zielperson Erfassen eines Bildes mit einer Kamera (14) der Vorrichtung (1) und Detektieren der Zielperson in dem erfassten Bild umfasst.

11. Elektronische Vorrichtung (1) zum Durchsuchen einer Sammlung von Bildern, **dadurch gekennzeichnet, dass** sie eine Verarbeitungseinheit (11) umfasst, die dazu ausgelegt ist, einen Befehl zum Anzeigen (c) einer Teilmenge einer Sammlung von Bildern auf einer Schnittstelle (13) der Vorrichtung (1) auszugeben, wobei die Teilmenge gemäß einem Anpassungsprozess angeordnet ist, wobei die Teilmenge basierend auf in den Bildern dargestellten Personen in Abhängigkeit von einer bestimmten Zielperson ausgewählt (b0, b0') und/oder sortiert (b1) wird, wobei die Zielperson eine Person ist, die an einer Operation beteiligt ist, die unter Verwendung der elektronischen Vorrichtung durchgeführt wird.

12. Elektronische Vorrichtung (1) nach Anspruch 11, wobei die Verarbeitungseinheit (11) ferner dazu ausgelegt ist, die Zielperson zu bestimmen (a1) und die Teilmenge basierend auf auf dem Bild dargestellten Personen in Abhängigkeit von der Zielperson anzupassen (b).

13. Computerprogrammprodukt, das Codeanweisungen zur Ausführung eines Verfahrens nach einem der Ansprüche 1 bis 10 zum Betreiben einer elektronischen Vorrichtung (1) zum Durchsuchen einer Sammlung von Bildern umfasst.

14. Computerlesbares Medium, auf dem ein Computerprogrammprodukt gespeichert ist, das Codeanweisungen zur Ausführung eines Verfahrens nach einem der Ansprüche 1 bis 10 zum Betreiben einer elektronischen Vorrichtung (1) zum Durchsuchen einer Sammlung von Bildern umfasst.

## Revendications

1. Procédé de fonctionnement un dispositif électronique (1) pour parcourir une collection d'images, **caractérisé en ce que** ledit procédé comprend les étapes consistant à :
déterminer (a1) une personne cible, ladite personne cible étant une personne impliquée dans une opération réalisée en utilisant ledit un dispositif électronique (1) ;
adapter (b) un sous-ensemble de ladite collection d'images sur la base de personnes représentées dans lesdites images en fonction de ladite personne cible, ladite adaptation comprenant la sélection (b0, b0') et/ou le tri (b1) dudit sous-ensemble de ladite collection d'images ; et
afficher (c), sur une interface (13) du dispositif (1), ledit sous-ensemble de ladite collection d'images, le sous-ensemble affiché d'images étant agencé selon ladite adaptation.

2. Procédé selon la revendication 1, comprenant en outre une étape (a) consistant à détecter un événement déclencheur réalisé par un utilisateur sur le dispositif électronique (1), l'étape consistant à déterminer (a1) la personne cible étant réalisée en réponse à ladite détection d'un événement déclencheur.

3. Procédé selon l'une quelconque des revendications 1 et 2, comprenant en outre la réalisation (a0) sur au moins l'une desdites images d'un algorithme de reconnaissance faciale afin de reconnaître au moins une personne dans ladite au moins l'une desdites images.

4. Procédé selon la revendication 3, dans lequel la réalisation (a0), sur au moins l'une desdites images, dudit algorithme de reconnaissance faciale comprend la détermination de paramètres caractérisant un visage d'une personne représentée dans ladite image, l'adaptation (b) du sous-ensemble étant réalisée sur la base desdits paramètres.

5. Procédé selon la revendication 4, dans lequel des coordonnées d'au moins une personne connue sont associées, dans le dispositif électronique (1), à un visage de référence de ladite personne connue et/ou à des paramètres caractérisant ledit visage de référence, l'adaptation (b) du sous-ensemble étant réalisée sur la base dudit visage de référence et/ou desdits paramètres.

6. Procédé selon l'une quelconque des revendications 1 à 5, dans lequel l'adaptation (b) d'un sous-ensemble de ladite collection d'images comprend la sélection (b0) dudit sous-ensemble de ladite collection d'images sur la base de personnes représentées dans les images en fonction de ladite personne cible, en particulier la sélection du sous-ensemble de ladite collection d'images représentant ladite personne cible.

7. Procédé selon la revendication 6, dans lequel l'adaptation (b) d'un sous-ensemble de ladite collection d'images comprend le tri (b1) dudit sous-ensemble de ladite collection d'images sur la base de personnes représentées dans les images en fonction de ladite personne cible.

8. Procédé selon l'une quelconque des revendications 1 à 7, dans lequel l'adaptation (b) d'un sous-ensemble de ladite collection d'images est réalisée selon un critère donné concernant lesdites personnes représentées dans les images par rapport à la personne cible, ledit critère donné étant en particulier un niveau de lien d'intimité entre la personne cible et lesdites personnes représentées dans les images.

9. Procédé selon l'une quelconque des revendications 1 à 8, dans lequel ladite personne cible est déterminée comme étant la personne qui utilise actuellement le dispositif (1).

10. Procédé selon l'une quelconque des revendications 1 à 9, dans lequel la détermination (a1) de ladite personne cible comprend l'acquisition d'une photo avec une caméra (14) du dispositif (1) et la détection de la personne cible dans ladite photo acquise.

11. Dispositif électronique (1) pour parcourir une collection d'images, **caractérisé en ce qu'**il comprend une unité de traitement (11) configurée pour commander l'affichage (c), sur une interface (13) du dispositif (1), d'un sous-ensemble d'une collection d'images, ledit sous-ensemble étant agencé selon un processus d'adaptation dans lequel ledit sous-ensemble est sélectionné (b0, b0') et/ou trié (b1) sur la base de personnes représentées dans les images en fonction d'une personne cible déterminée, ladite personne cible étant une personne impliquée dans une opération réalisée en utilisant ledit dispositif électronique.

12. Dispositif électronique (1) selon la revendication 11, dans lequel l'unité de traitement (11) est en outre configurée pour déterminer (a1) ladite personne cible et adapter (b) ledit sous-ensemble sur la base de personnes représentées sur l'image en fonction de ladite personne cible.

13. Produit-programme d'ordinateur, comprenant des instructions de code pour exécuter un procédé selon l'une quelconque des revendications 1 à 10 pour exploiter un dispositif électronique (1) afin de parcourir une collection d'images.

14. Support lisible par ordinateur, sur lequel est stocké un produit-programme d'ordinateur comprenant des instructions de code pour exécuter un procédé selon l'une quelconque des revendications 1 à 10 pour exploiter un dispositif électronique (1) afin de parcourir une collection d'images.
